# EUROPEAN PATENT APPLICATION

(11) **EP 3 647 910 A1**
(43) Date of publication of application: **06.05.2020**
(21) Application number: 18203519.6
(22) Date of filing: 30.10.2018
(51) Int. Cl.: G06F 3/01, G01S 13/86, G06K 9/62

(54) **AN IMPROVED APPARATUS FOR USER INTERACTION**

(71) Applicant: Infineon Technologies AG, 85579 Neubiberg (DE)
(72) Inventor: MANDL, Christian, 81549 München (DE); NEUMAIER, Daniel, 9560 Feldkirchen (AT)
(74) Representative: Schlenker, Julian

(57) **Abstract**

An embodiment relates to an apparatus, wherein the apparatus is configured to use a first sensor to identify a user of the apparatus, to obtain a temporarily identified user, wherein the apparatus is configured to use a second sensor, different from the first sensor, to spatially track the identified user, in order to update a position assigned to the identified user, to obtain an identified and localized user, and wherein the apparatus is configured to link a user interaction to the identified and localized user by determining whether the user interaction was performed by the identified and localized user.

## Description

### Technical field

The invention pertains to the field of improving user interaction in smart assistant solutions, and specifically, of improving user context awareness in smart assistant solutions.

### Background

The next evolution step of smart assistant systems is that they gain more and more context awareness. The target is that these smart assistant systems know who is giving the input, where and why the user is giving the input etc. to give the best possible feedback based on context information. This is important because the final goal is to lift human-machine communication to a level of real interpersonal conversation. Without saying a name or intentionally switching to a specific user profile the system should, for example, store a note from a specific user in exactly its user notes or link a voice-based calendar entry without specifically mentioning it in exactly the calendar of the user who spoke. For example, today's common smart home assistant systems mostly relay on voice-based user communication. Therefore, the very important context information about who is speaking cannot at all or just be extracted out of the audio input signal via speaker identification algorithms. Though continuous and maybe text independent speaker identification, especially over varying far field source positions can be complex and error prone.

Common smart assistant solutions do not independently link the user context to a given input or some more advanced systems like particular smart speakers use the text specific trained wake up keyword to specify the user. Therefore, they can just temporary link the input to the identified user after the wake-up command has been said or they need the information about the user as an additional external input.

This implementation generates failures in real life situations, as sometime the keyword is stated and the user identified but during the next speaking phase another person continues talking. It is not possible for the machine to identify that the speaker has changed.

The invention seeks to improve this situation.

### Summary

An embodiment relates to an apparatus, wherein the apparatus is configured to use a first sensor to identify a user of the apparatus, to obtain a temporarily identified user, wherein the apparatus is configured to use a second sensor, different from the first sensor, to spatially track the identified user, in order to update a position assigned to the identified user, to obtain an identified and localized user, and wherein the apparatus is configured to link a user interaction to the identified and localized user by determining whether the user interaction was performed by the identified and localized user.

An embodiment relates to a method, wherein the method comprises a step of using a first sensor to identify a user of the apparatus, to obtain a temporarily identified user, wherein the method comprises a step of using a second sensor, different from the first sensor, to spatially track the identified user, in order to update a position assigned to the identified user, to obtain an identified and localized user, and wherein the method comprises a step of linking a user interaction to the identified and localized user by determining whether the user interaction was performed by the identified and localized user.

### Brief description of the drawings

Further features and advantages of the invention will become more apparent by reading the following detailed description of the embodiments, which are given by way of non-limiting examples with reference to the appended drawings, in which:
- Fig. 1: shows a schematic block diagram of an apparatus, according to an embodiment;
- Fig. 2: shows a schematic block diagram of an apparatus, according to another embodiment;
- Fig. 3: shows a schematic illustration of the concept for maintaining a user of a smart assistant system identified and located, according to an embodiment;
- Fig. 4: shows a schematic block diagram of a microphone beamforming sensor system combined with a radar system in a smart home assistant, according to an embodiment; and
- Fig. 5: shows a flowchart of a method, according to an embodiment.

### Detailed description

In the following description, a plurality of details are set forth to provide a more thorough explanation of embodiments of the present invention. However, it will be apparent to one skilled in the art that embodiments of the present invention may be practiced without these specific details. In other instances, well-known structures and devices are shown in block diagram form rather than in detail in order to avoid obscuring embodiments of the present invention. In addition, features of the different embodiments described hereinafter may be combined with each other, unless specifically noted otherwise.

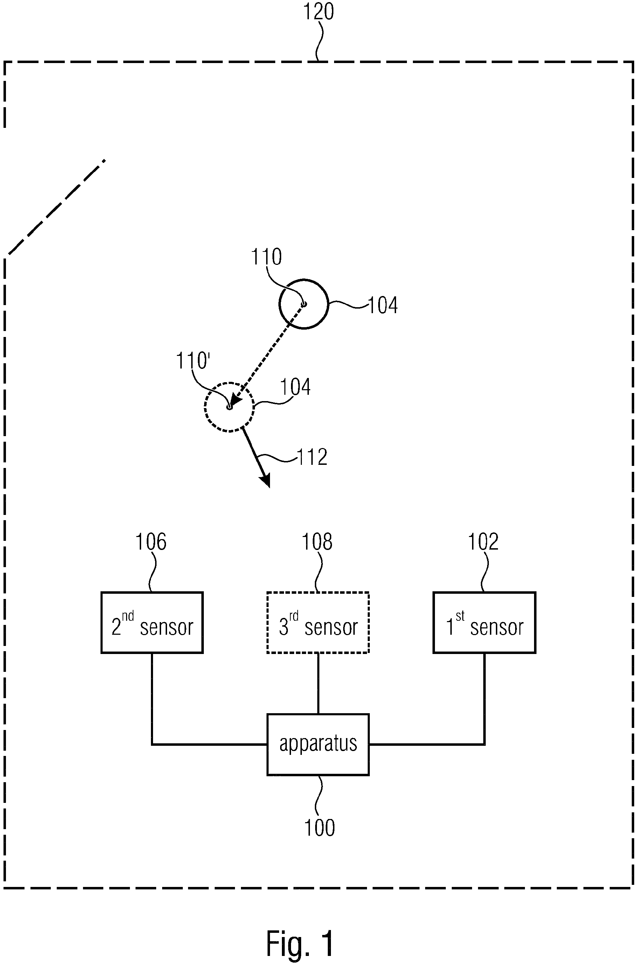

Fig. 1 shows a schematic block diagram of an apparatus 100, according to an embodiment. The apparatus 100 is configured to use a first sensor 102 to identify a user 104 of the apparatus 100, to obtain a temporarily identified user. Further, the apparatus 100 is configured to use a second sensor 106, different from the first sensor 102, to spatially track the identified user 104, in order to update a position 110, 110' assigned to the identified user 104, to obtain an identified and localized user. Further, the apparatus 100 is configured to link a user interaction 112 to the identified and localized user 104 by determining whether the user interaction 112 was performed by the identified and localized user.

According to embodiments, two different sensors 102, 106 are used for identifying and tracking a user 104 of the apparatus 100, thereby maintaining the user 104 identified and localized, allowing to determine whether a user interaction 112 that is performed sometime after the initial identification of the user 104 is performed by the identified and localized user 104. In detail, a first sensor 102 can be used for (temporarily or initially) identifying the user 104, e.g., by means of an acoustic keyword or a visual recognition (e.g., face recognition), wherein a second sensor 106 can be used for tracking the identified user 104, thereby maintaining the user 104 identified and localized, although a position 110, 110' of the user 104 with respect to the apparatus 100 may change, as indicated in Fig. 1. This allows to link a user interaction 112 to the identified and localized user 104, even if the user interaction 112 is performed sometime after the initial identification of the user 104 (e.g., one or several seconds, minutes, hours or even days after the initial identification 112 of the user 104) and even if the identified and localized user 104 changes its position 110, 110' with respect to the apparatus 100.

In other words, according to embodiments, with a temporary user identification (e.g., acoustic key word, looking at camera) the system can permanently keep the information about who is the user by tracking the position. Hence, a permanent awareness about who is the user can be achieved by bridging the time between temporary identification steps via location-based tracking.

In embodiments, the first sensor 102 can be an identification sensor.

For example, the identification sensor can be a microphone or a microphone array. Thereby, the user 104 can be identified, for example, based on an acoustic keyword or a voice recognition.

For example, the identification sensor can be a camera. Thereby, the user 104 can be identified, for example, based on a visual recognition, such as a face recognition.

For example, the identification sensor can be a TOF (time-of-flight) sensor. Thereby, the user 104 can be identified, for example, based on a depth map obtained using the TOF sensor.

Further, it is also possible that the TOF sensor is a TOF camera. In that case, the user 104 can be identified, for example, based on a visual recognition, such as a face recognition.

In embodiments, the second sensor 106 can be a spatial tracking sensor.

For example, the spatial tracking sensor can be a radar or a time-of-flight sensor.

As shown by way of example in Fig. 1, the apparatus 100 can be connected to the first sensor 102 and the second sensor 106, e.g., by a wired or a wireless connection.

In embodiments, the apparatus 100 can be configured to initially locate a position of the identified user 104 in response to identifying the user 104 of the apparatus 100 and to initially assign the located position 110 to the identified user 104.

Thereby, the apparatus 100 can be configured to initially locate the identified user 104 using the first sensor 102 or a position information associated with the first sensor 102.

For example, the first sensor 102 can be a camera, wherein in response to identifying the user 104 using the camera the user 104 can be initially located using the camera, e.g. based on a known camera position and/or detection area of the camera.

For example, the first sensor 102 can be a microphone array, wherein in response to identifying the user 104 using the microphone array the user 104 can be initially located using the microphone array, e.g., based on a direction from which the acoustic keyword or the voice of the user 104 is received (or detected) at the microphone array.

Naturally, the apparatus 100 also can be configured to use the second sensor 106 or both, the first sensor 102 and the second sensor 106 for initially locating the identified user 104.

For example, assuming that the first sensor 102 is a camera, the user 104 can be initially identified by means of a visual recognition (e.g., face recognition), wherein in response to identifying the user 104 the camera can be used for initially locating the user (e.g., based on a known camera position and/or detection area of the camera) and/or using the second sensor 106, which can be a radar or time of flight sensor. Naturally, the first sensor 102 also can be a microphone, wherein the user 104 can be initially identified by means of an acoustic keyword or a voice recognition, wherein in response to identifying the user 104 the microphone, if implemented as microphone array, can be used for initially locating the user (e.g., based on a direction from which the acoustic keyword or the voice of the user 104 is received) and/or using the second sensor 106, which can be a radar or time of flight sensor.

In embodiments, the apparatus 100 can be configured to maintain the identified user 104 identified by updating the position 110, 110' assigned to the identified user.

In embodiments, the apparatus 100 can be configured to use the second sensor 106 to identify (or re-identify) the identified and localized user 104, to confirm the identification of the identified and localized user 104.

For example, the apparatus 100 can be configured to confirm the identification of the identified and localized user 104, by using the second sensor 106 to identify (or re-identify) the user 104, e.g., whenever possible. Thus, the second senor 106 not only can be used for tracking the identified user 104 but also for identifying the user (e.g., person) 104 at a different time. For instance, the first sensor 102 can be a microphone, wherein the second sensor 106 can be a TOF camera. In that case, the first sensor 102 (microphone) can be used to identify the user 104 based on an acoustic keyword, i.e., when the user 104 speaks but not when the user 104 is quiet. However, the second sensor 106 (TOF camera) can be used to track the user 104 and additionally to identify the user 104 when the user 104 faces the second sensor 106 (TOF camera). Thus, the apparatus 100 can be configured to confirm the identification of the user 104 whenever possible with the second sensor 106.

In embodiments, the apparatus 100 can be configured to detect the user interaction 112 using the first sensor 102 or a third sensor 108, different from the first sensor 102 and the second sensor 106.

For example, the first sensor 102 used for identifying the user 104 of the apparatus can be a microphone or a microphone array. In this case, the microphone or a microphone array can be used for detecting e.g. a voice command as user interaction 112. However, it is also possible to use, for example, a camera as third sensor 108 for detecting e.g. a gesture as user interaction.

For example, the first sensor 102 used for identifying the user 104 of the apparatus 100 can be a camera. In this case, the camera can be used for detecting e.g. a gesture as user interaction 112. However, it is also possible to use, for example, a microphone or microphone array for detecting e.g. a voice command as user interaction 112.

For example, the apparatus 100 can be implemented based on camera and a time of flight sensor. Naturally, other implementations are also possible, such as based on a microphone array and a radar or time of flight sensor, or based on a camera and a radar or time of flight sensor.

As shown in Fig. 1 by way of example, the apparatus 100 can be placed in a facility 120, such as a room of a building, e.g., of a home.

In embodiments, the apparatus 100 can be a smart assistant system, such as a smart home interface device.

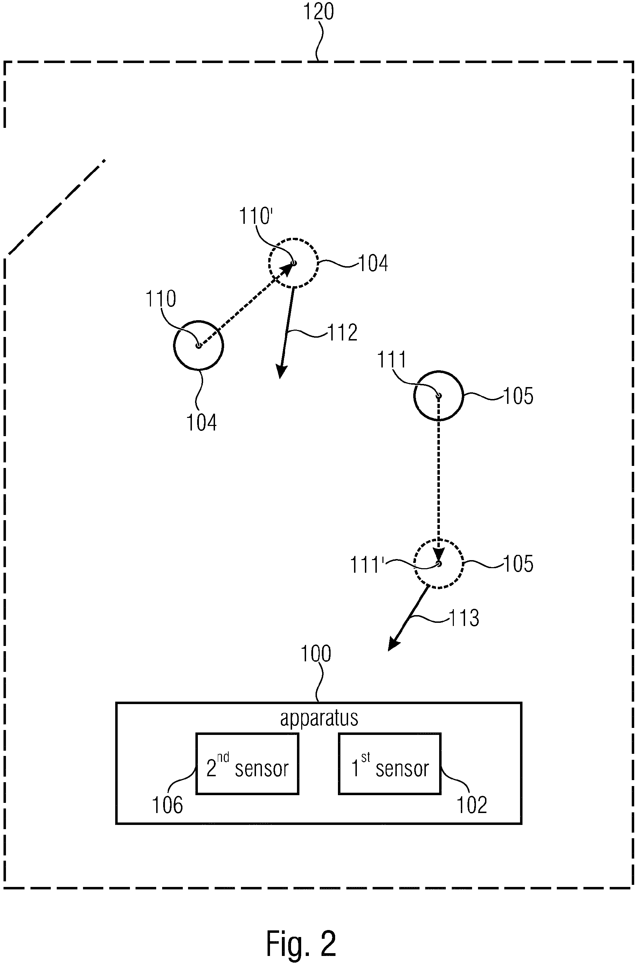

Fig. 2 shows a schematic block diagram of an apparatus 100, according to another embodiment. In contrast to the embodiment shown in Fig. 1, in the embodiment shown in Fig. 2 the apparatus 100 comprises the first sensor 102 and the second sensor 106. Naturally, it is also possible that the apparatus 100 comprises only one out of the first sensor 102 and the second sensor 106 and is connected to the other one, e.g., by means of a wired or wireless connection.

Referring to the embodiments of Figs. 1 and 2, the apparatus 100 can further be configured to use the first sensor 102 to identify a second user 105 of the apparatus 100, to obtain a temporarily identified second user, and to use the second sensor 106 in order to update a position 111, 111' assigned to the identified second user 105, to obtain an identified and localized second user 105. Further, the apparatus 100 can be configured
- to link a user interaction 113 to the identified and localized second user 105 by determining whether the user interaction was performed by the identified and localized second user 105,
- or to link the user interaction 112 to the identified and localized first user 104 by determining whether the user interaction was performed by the identified and localized first user 104.

Thereby, the first user 104 and the second user 105 can be located in the same facility 120, such as a room of a building, e.g., of a home.

In the following, detailed embodiments of the apparatus 100 are described.

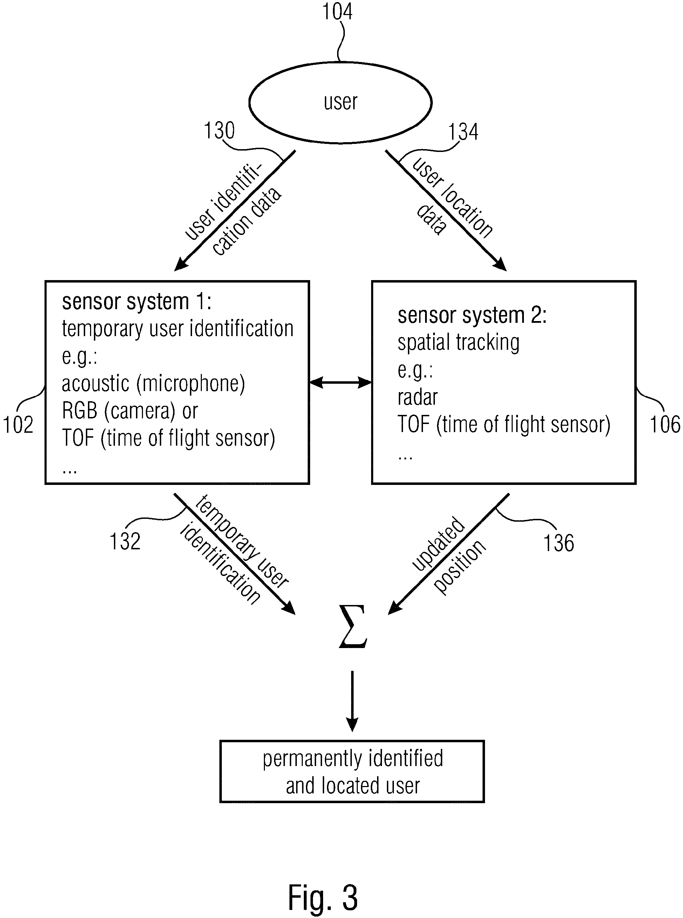

According to embodiments, by making use of sensor data fusion (from the first sensor 102 and the second sensor 104) the permanent context information about the user 104 can be efficiently generated with an identification and tracking approach. A first user identification sensor system (first sensor 102), e.g., acoustic (microphone), RGB (camera), TOF (time of flight sensor) or any other capable sensor, temporary and uniquely classifies the user 104 and refers it to a second sensor 106 capable of tracking and localization (e.g.: radar, TOF). As long as the tracking is maintained all subsequent user actions 112 can be linked to the uniquely identified person 104 without the need of continuously executing user identification tasks. In other words, with a temporary user identification, e.g., acoustic key word, looking at camera, the system can permanently keep the information about who is the user 104 by tracking the position. Fig. 3 visualizes the basic principle of the identification and tracking approach for efficient permanent user awareness.

In detail, Fig. 3 shows a schematic illustration of the concept for maintaining a user 104 of a smart assistant system identified and located, according to an embodiment. As indicated in Fig. 3, a first sensor system (or first sensor) 102 can be used to temporarily identify a user 104, e.g., based on user identification data 130, such as acoustic data (e.g., acquired using a microphone as first sensor 102), RGB data (e.g., acquired using a camera as first sensor 102) or TOF data (e.g., acquired using a time-of-flight sensor as first sensor 102), to a temporary user identification 132. Further, a second sensor system (or second sensor) 106 can be used to spatially track the user 104, e.g., by determining user location data 134 using radar or time-of-flight sensor as the second sensor 106, in order to obtain a (e.g., continuously or periodically) updated position 136 of the user 104. As in indicated in Fig. 3, based on the temporary user identification 132 and the (e.g., continuously or periodically) updated position 136 of the user 104, a (permanently) identified and located user is obtained.

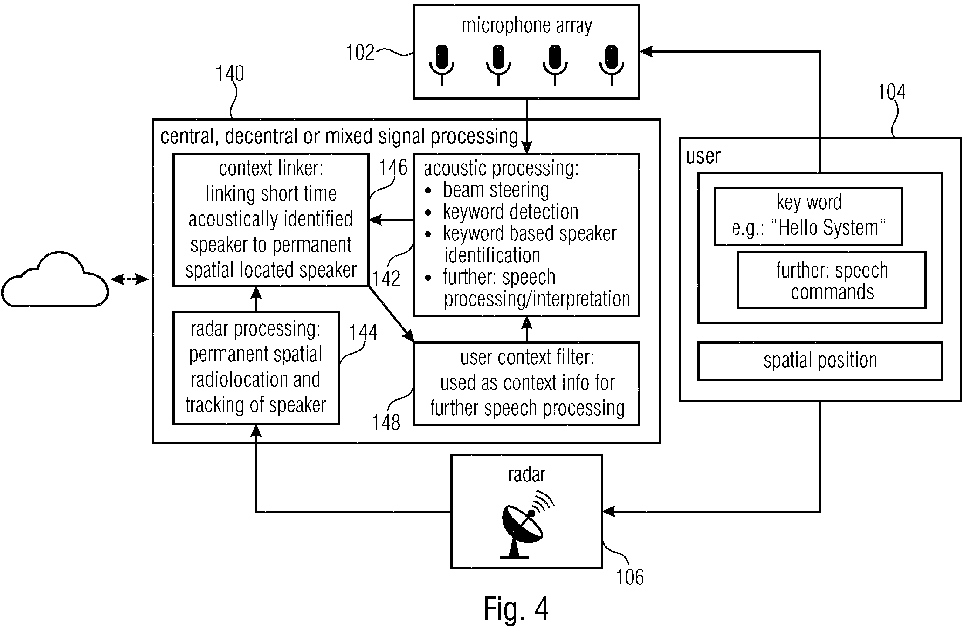

Subsequently, an application example of an acoustic microphone beamforming sensor as first sensor 102 system combined with a radar system as second sensor 106 in a smart home assistant is described with reference to Fig. 4.

In detail, Fig. 4 shows a schematic block diagram of a microphone beamforming sensor system 102 combined with a radar system 106 in a smart home assistant 100, according to an embodiment. A key word from the user 104 can activate the system and acoustic speaker recognition can be executed, e.g., to obtain a temporary user identification. Acoustic beam forming can localize the identified speaker (user) 104. The radar 106 can be assigned to the acoustically localized speaker (user) 104 and to track from this time on the classified speaker (user) 104, e.g., to obtain a (e.g., continuously or periodically) updated position of the user 104, thereby obtaining a (permanently) identified and located user.

As indicated in Fig. 4, central, decentral or mixed signal processing 140 can be performed by the smart home assistant 100. Signal processing 140 can comprise acoustic processing 142, such as beam steering, key word detection, key word based speaker identification, and optionally speech processing/interpretation. Further, signal processing 140 can comprise radar processing 144, such as permanent spatial radiolocation and tracking of the speaker (user) 104. Further, signal processing 140 can comprise context linking 146, such as linking a short time acoustically identified speaker (user) 104 to a permanent spatially located speaker (user) 104. Further, signal processing 140 can comprise user context filtering 148, e.g., used as context information for further speech processing in the acoustic processing 142.

An efficient and little error prone method of identifying the speaker (user) 104 is, for example, to use a specific word like the key/wake up word of a smart home assistant to also execute the speaker identification task. It is easier to extract user specific voice features, train, e.g., a neural network and run the detection with a specific word than to do this identification text independent. Nevertheless, the drawback is that this happens just from time to time and inbetween there is maybe no (reliable) acoustical information about who is speaking.

Therefore, a second sensor system 106 is used to bridge over this time intervals by spatial radiolocation of the initial identified speaker (user) 104.

Image based sensors are also able to identify persons only at specific time slots (e.g. when the person looks to the camera in the right angle and distance). It is essential that also in these implementations a reliable tracking function is making sure that the person (user) 104 is tracked and followed.

Embodiments provide an efficient method of permanently having important user context information in smart assistant services.

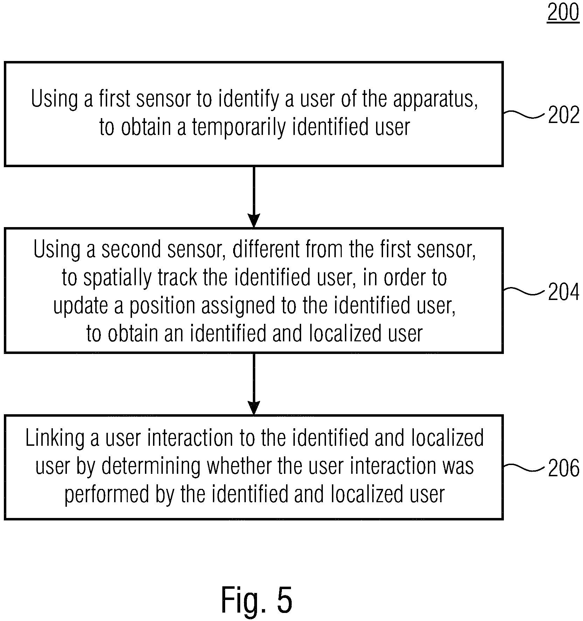

Fig. 5 shows a flowchart of a method 200, according to an embodiment. The method 200 comprises a step 202 of using a first sensor to identify a user of the apparatus, to obtain a temporarily identified user. Further, the method 200 comprises a step 204 of using a second sensor, different from the first sensor, to spatially track the identified user, in order to update a position assigned to the identified user, to obtain an identified and localized user. Further, the method 200 comprises a step 206 of linking a user interaction to the identified and localized user by determining whether the user interaction was performed by the identified and localized user.

Subsequently, further embodiments are described.

An embodiment relates to an apparatus, wherein the apparatus is configured to use a first sensor to identify a user of the apparatus, to obtain a temporarily identified user, wherein the apparatus is configured to use a second sensor, different from the first sensor, to spatially track the identified user, in order to update a position assigned to the identified user, to obtain an identified and localized user, and wherein the apparatus is configured to link a user interaction to the identified and localized user by determining whether the user interaction was performed by the identified and localized user.

According to an embodiment, the apparatus is configured to use the first sensor to initially identify the user of the apparatus, wherein the apparatus is configured to maintain the identified user identified by updating the position assigned to the identified user.

According to an embodiment, the apparatus is configured to initially locate the identified user in response to identifying the user of the apparatus and to initially assign the located position to the identified user.

According to an embodiment, the apparatus is configured to initially locate the identified user using the first sensor or a position information associated with the first sensor.

According to an embodiment, the apparatus is configured to use the second sensor to identify the identified and localized user, to confirm the identification of the identified and localized user.

According to an embodiment, the apparatus is configured to detect the user interaction using the first sensor or a third sensor, different from the first sensor and the second sensor.

According to an embodiment, the user is a fist user, wherein the apparatus is configured to use the first sensor to identify a second user of the apparatus, to obtain a temporarily identified second user, wherein the apparatus is configured to use the second sensor in order to update a position assigned to the identified second user, to obtain an identified and localized second user, wherein the apparatus is configured
- to link a user interaction to the identified and localized second user by determining whether the user interaction was performed by the identified and localized second user
- or to link the user interaction to the identified and localized first user by determining whether the user interaction was performed by the identified and localized first user.

According to an embodiment, the first user and the second user are located in the same room.

According to an embodiment, the apparatus comprises the first sensor.

According to an embodiment, the apparatus is connected to the first sensor.

According to an embodiment, the apparatus comprises the second sensor.

According to an embodiment, the apparatus is connected to the second sensor.

According to an embodiment, the first sensor is an identification sensor.

According to an embodiment, the identification sensor is a microphone, a camera, a time of flight camera, or a time of flight sensor.

According to an embodiment, the second sensor is a spatial tracking sensor.

According to an embodiment, the spatial tracking sensor is a radar or time of flight sensor.

According to an embodiment, the apparatus is a smart home interface device.

An embodiment relates to a method, wherein the method comprises a step of using a first sensor to identify a user of the apparatus, to obtain a temporarily identified user, wherein the method comprises a step of using a second sensor, different from the first sensor, to spatially track the identified user, in order to update a position assigned to the identified user, to obtain an identified and localized user, and wherein the method comprises a step linking a user interaction to the identified and localized user by determining whether the user interaction was performed by the identified and localized user.

An embodiment relates to an apparatus, wherein the apparatus comprises means for using a first sensor to identify a user of the apparatus, to obtain a temporarily identified user, wherein the apparatus comprises means for using a second sensor, different from the first sensor, to spatially track the identified user, in order to update a position assigned to the identified user, to obtain an identified and localized user, and wherein the apparatus comprises means for linking a user interaction to the identified and localized user by determining whether the user interaction was performed by the identified and localized user.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus. Some or all of the method steps may be executed by (or using) a hardware apparatus, like for example, a microprocessor, a programmable computer or an electronic circuit. In some embodiments, one or more of the most important method steps may be executed by such an apparatus.

Depending on certain implementation requirements, embodiments of the invention can be implemented in hardware or in software. The implementation can be performed using a digital storage medium, for example a floppy disk, a DVD, a Blu-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. The data carrier, the digital storage medium or the recorded medium are typically tangible and/or nontransitionary.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The apparatus described herein may be implemented using a hardware apparatus, or using a computer, or using a combination of a hardware apparatus and a computer.

The apparatus described herein, or any components of the apparatus described herein, may be implemented at least partially in hardware and/or in software.

The methods described herein may be performed using a hardware apparatus, or using a computer, or using a combination of a hardware apparatus and a computer.

The methods described herein, or any components of the apparatus described herein, may be performed at least partially by hardware and/or by software.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. An apparatus (100),
wherein the apparatus (100) is configured to use a first sensor (102) to identify a user (104) of the apparatus (100), to obtain a temporarily identified user (104),
wherein the apparatus (100) is configured to use a second sensor (102), different from the first sensor (102), to spatially track the identified user (104), in order to update a position (110,110') assigned to the identified user (104), to obtain an identified and localized user (104),
wherein the apparatus (100) is configured to link a user interaction (112) to the identified and localized user (104) by determining whether the user interaction (112) was performed by the identified and localized user (104).

2. The apparatus (100) according to the preceding claim,
wherein the apparatus (100) is configured to use the first sensor (102) to initially identify the user (104) of the apparatus (100),
and wherein the apparatus (100) is configured to maintain the identified user (104) identified by updating the position (110,110') assigned to the identified user (104).

3. The apparatus (100) according to one of the preceding claims,
wherein the apparatus (100) is configured to initially locate the identified user (104) in response to identifying the user (104) of the apparatus (100) and to initially assign the located position to the identified user (104).

4. The apparatus (100) according to the preceding claim,
wherein the apparatus (100) is configured to initially locate the identified user (104) using the first sensor (102) or a position information associated with the first sensor (102).

5. The apparatus (100) according to one of the preceding claims,
wherein the apparatus (100) is configured to detect the user (104) interaction using the first sensor (102) or a third sensor (108), different from the first sensor (102) and the second sensor (106).

6. The apparatus (100) according to one of the preceding claims,
wherein the apparatus (100) is configured to use the second sensor (106) to identify the identified and localized user (104), to confirm the identification of the identified and localized user (104).

7. The apparatus (100) according to one of the preceding claims,
wherein the user (104) is a fist user (104),
wherein the apparatus (100) is configured to use the first sensor (102) to identify a second user (105) of the apparatus (100), to obtain a temporarily identified second user (105),
wherein the apparatus (100) is configured to use the second sensor (106) in order to update a position assigned to the identified second user (105), to obtain an identified and localized second user (105),
wherein the apparatus (100) is configured
- to link a user interaction (113) to the identified and localized second user (105) by determining whether the user interaction (113) was performed by the identified and localized second user (105)
- or to link the user interaction (112) to the identified and localized first user (104) by determining whether the user interaction (112) was performed by the identified and localized first user (104).

8. The apparatus (100) according to the preceding claim,
wherein the first user (104) and the second user (105) are located in the same room.

9. The apparatus (100) according to one of the preceding claims,
wherein the apparatus (100) comprises the first sensor (102) or wherein the apparatus (100) is connected to the first sensor (102),
wherein the apparatus (100) comprises the second sensor (106) or wherein the apparatus (100) is connected to the second sensor (106).

10. The apparatus (100) according to one of the preceding claims,
wherein the first sensor (102) is an identification sensor.

11. The apparatus (100) according to the preceding claim,
wherein the identification sensor is a microphone, a camera or a time of flight sensor.

12. The apparatus (100) according to one of the preceding claims,
wherein the second sensor (106) is a spatial tracking sensor.

13. The apparatus (100) according to the preceding claim,
wherein the spatial tracking sensor is a radar or time of flight sensor.

14. The apparatus (100) according to one of the preceding claims,
wherein the apparatus (100) is a smart home interface device.

15. Method (200), comprising:
using (202) a first sensor to identify a user of the apparatus, to obtain a temporarily identified user,
using (204) a second sensor, different from the first sensor, to spatially track the identified user, in order to update a position assigned to the identified user, to obtain an identified and localized user,
linking (206) a user interaction to the identified and localized user by determining whether the user interaction was performed by the identified and localized user.

16. Computer program for performing a method according to the preceding claim when the computer program runs on a computer or microprocessor.
